# EUROPEAN PATENT APPLICATION

(11) **EP 2 073 313 A2**
(43) Date of publication of application: **24.06.2009**
(21) Application number: 08021183.2
(22) Date of filing: 05.12.2008
(51) Int. Cl.: H01R 4/36, H01R 9/24

(54) **Electrical connector, and contact arrangements therefor**

(30) Priority: 22.12.2007 GB 0725131
(71) Applicant: W.Lucy&Co. Limited, Thame Oxfordshire OX9 3UJ (GB)
(72) Inventor: Horner, Scott, Bicester Oxon, OX26 3WW (GB); Khaled, Munir, Greater Leys Oxford, OX4 7FD (GB)
(74) Representative: Downing, Michael Philip

(57) **Abstract**

A contact for an item of electrical equipment comprises a cable connector and an upstanding blade against which a contact is to be made, the blade comprising a strip of metal including a fold line thereby to form a two-layer section. Such a contact therefore has a more rigid upstand yet can be formed more easily. Typically, the fold line will be at a tip of the upstanding blade, allowing the two free ends at the base to be splayed to as to anchor the contact in place securely without the need for joins in the contact piece. In an alternative, an electrical distribution box comprises a tray supporting at least one contact, the contact being in the form of a flat conductor having an angle formed therein and a sleeve around at least the angled part thereof, the tray having a recess in which the sleeve is supported thereby to support the contact. This allows the same tray to be used for a variety of electrical ratings. As the rating increases, the contact will generally become more substantial and hence of greater thickness, so the sleeve can become correspondingly thinner or be omitted entirely. The same tray can be used for connectors of different ratings. In either of the above aspects, the contact is preferably one of three such contacts in an array for using in conveying a three-phase electrical supply.

## Description

### FIELD OF THE INVENTION

The present invention relates to an electrical connector and the contacts that form part thereof.

### BACKGROUND ART

Electrical distribution networks require large numbers of interconnections, of varying types. These interconnections are subject to stringent controls as to their performance and operating qualities, for obvious reasons. However, their ubiquity results in a strong downward cost pressure.

Connectors with cut-outs are commonly installed at the point of supply to a building or a large item of equipment. An incoming electrical supply cable, often three-phase, is terminated on one side of the connector, and the supply cables leading to the item of equipment or to a network within the building are terminated on the other side. Removeable links with handles are provided in the connector housing, each of which contain a conductor which bridges the incoming and outgoing terminations when the handle is in place. Thus, to isolate the item or building, the handles can simply be removed.

A good quality contact will need to be made between the conductor in the handle and the termination, to prevent arcing on removal and welding together of the conductive parts during use. This usually means that the conductor in the handle needs to make contact with an upstanding blade-type contact onto which a sliding contact can be made.

### SUMMARY OF THE INVENTION

The upstanding blade contact is, in practice, difficult to make economically. On the one had, it must be rigid in order not to buckle as the handle is inserted, and must be firmly attached to the base so that it remains stable and upright. Also, connectors are usually supplied in various sizes to suit different electrical ratings, and this increases the complexity (and hence cost) of manufacture in that several different sized contacts need to be made, together with the necessary mouldings to support them. Generally, a contact that is suitable for a high electrical rating is uneconomic for use at a (relatively) low rating, and a contact that is suited to a low rating is unable to cope satisfactorily with a high rating.

In its first aspect, the present invention therefore provides a contact for an item of electrical equipment, comprising a cable connector and an upstanding blade against which a contact is to be made, the blade comprising a strip of metal including a fold line thereby to form a two-layer section.

Such a contact therefore has a more rigid upstand yet can be formed more easily. Typically, the fold line will be at a tip of the upstanding blade, allowing the two free ends at the base to be splayed to as to anchor the contact in place securely without the need for joins in the contact piece.

The strip of metal can thus include a bend at a base of the upstanding blade and the cable connector can then be attached to the strip of metal at a location therealong such that the bend lies between the upstanding blade and the cable connector. The bend is suitably a right-angle so that the blade projects upwards from a horizontal base, although other arrangements are possible.

As noted above, the strip of metal can include a further bend, one bend being formed in each layer, and the two bends being in opposite directions. This "splay" of the two sides of the blade allows the base of the blade to be firmly held against a base, especially if the bend and the further bend are adjacent.

A further cable connector can be attached to the strip of metal at a location therealong such that the further bend lies between the upstanding blade and the cable connector. This will permit multiple spurs or a ring circuit to be attached to an outgoing contact of this type.

In a second aspect, the invention provides an electrical distribution box, comprising a tray supporting at least one contact, the contact being in the form of a flat conductor having an angle formed therein and a sleeve around at least the angled part thereof, the tray having a recess in which the sleeve is supported thereby to support the contact.

This allows the same tray to be used for a variety of electrical ratings. As the rating increases, the contact will generally become more substantial and hence of greater thickness, in order to increase its cross-sectional area in line with the increasing rating and thereby keep the current density within acceptable limits. The only consequence of this need be that the sleeve becomes correspondingly thinner until (potentially) at the highest rated connector the sleeve is omitted entirely. The same tray can be used for all the connectors, thereby saving costs in relation to the manufacture of a large and potentially complex item.

The sleeve is preferably non-conductive, such as a suitable plastics material. As this item needs to be different for each version, it is ideally of an inexpensive material.

A cable connector can be attached directly to the conductor, to reduce the number of connections and the number of parts generally. The angle formed in the conductor thus both offers a suitable locating point for insertion into the sleeve and recess, and also enables the cable connector to be located and oriented suitably so as to receive an incoming (or outgoing) cable. That angle is preferably a right-angle, in which case the conductor will be substantially L-shaped.

In either of the above aspects, the contact is preferably one of three such contacts in an array for using in conveying a three-phase electrical supply.

Further the invention relates to an electrical distribution box having a set of incoming contacts according to the second aspect, for connection to an incoming cable from an electrical power source, and a set of outgoing contacts according to the first aspect, for connection to one or more outgoing cables to an electrical power consumer, and a set of removable bridges for joining contacts of the first set with corresponding contacts of the second set. Each set preferably has three contacts, and the bridges preferably each contain fusible links.

The present invention (generally) is felt to be of particular use in the context of medium to high voltage apparatus and in three-phase supply where the current can be substantial, such as 200-600 amps. Generally, in such contexts, the upstanding blade will be at least 50 millimetres in length and more typically 100 mm.

### BRIEF DESCRIPTION OF THE DRAWINGS

An embodiment of the present invention will now be described by way of example, with reference to the accompanying figures in which;
Figure 1 shows an external view of the connector unit with an associated cable tray;
Figure 2 shows a view of the cable tray;
Figure 3 shows the cable tray in an exploded configuration;
Figure 4 shows the connector unit;
Figure 5 shows a perspective view of the connector unit in an exploded configuration;
Figure 6 shows a view of the connector unit in an exploded configuration from above;
Figure 7 shows a perspective view from one side of the incoming contact;
Figure 8 shows a perspective view from another side of the incoming contact;
Figure 9 shows a view from the front of an outgoing contact according to an aspect of the present invention; and
Figure 10 shows a perspective view of the contact.

### DETAILED DESCRIPTION OF THE EMBODIMENTS

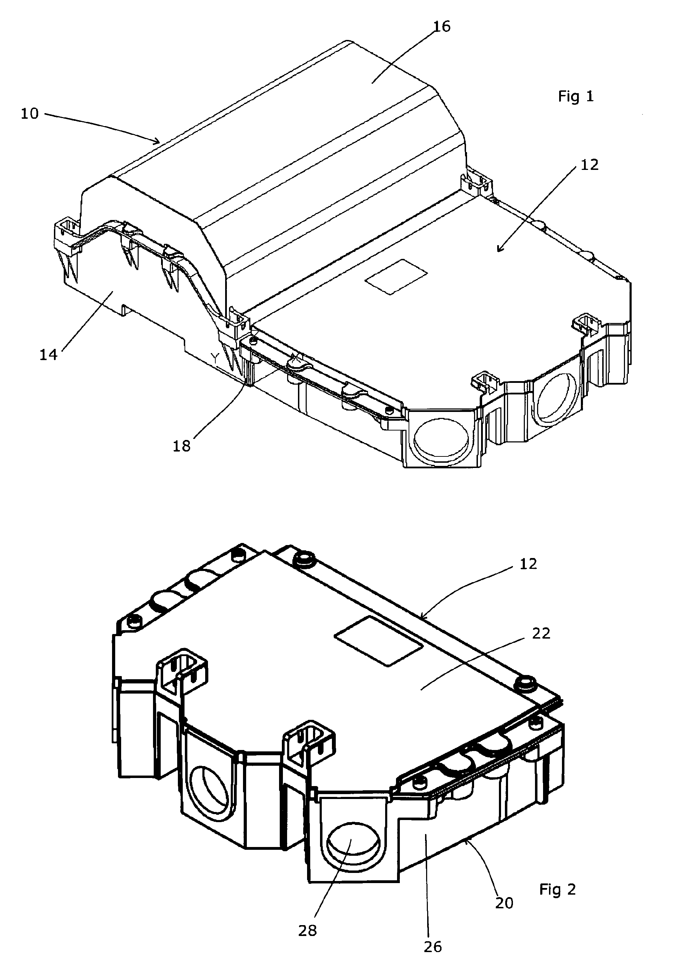

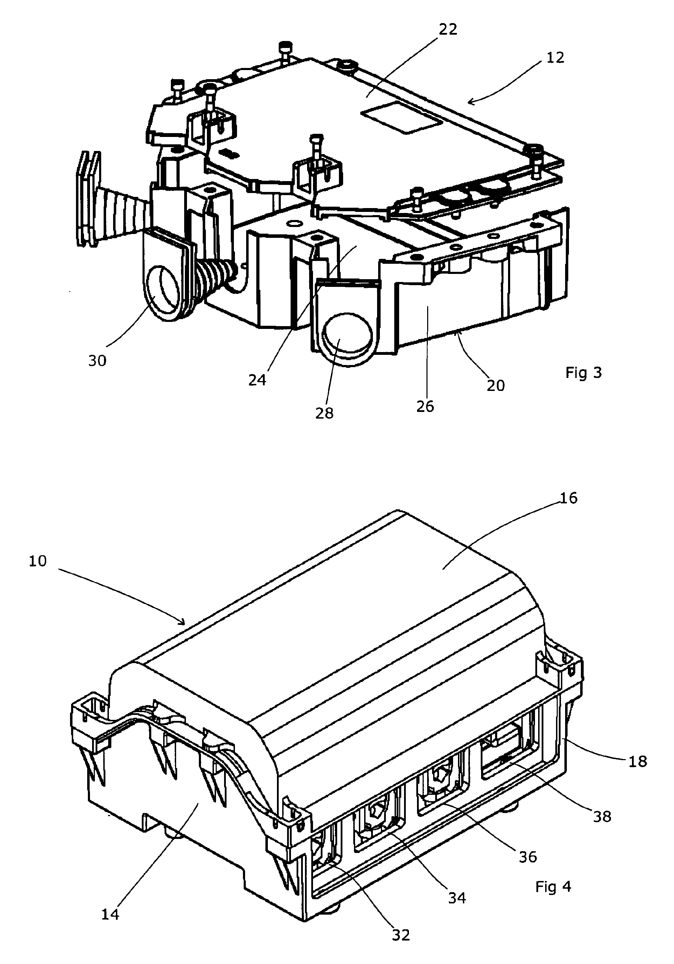

Figure 1 shows the connector unit 10 to which has been attached a cable tray 12. The connector unit 10 has a tray 14 which contains the various contacts and conductors (not visible in figure 1) and a lid 16 which covers the tray and is attached in place via suitable latches, screw-threaded fittings etc. The connector unit 10 has a number of ports on a front edge 18, which are covered by the cable tray 12. This is shown in more detail in figures 2 and 3, and comprises a cable tray base 20 and a lid 22. The cable tray base has a generally flat floor 24 surrounded on three sides by an upstanding wall 26. The fourth side is open and is intended to abut the front edge 18 of the connector unit 10. A plurality of cable entry ports 28 are provided in the upstanding wall 26, generally opposite the open fourth side. In this case, three cable entry ports 28 are provided, although this could be adjusted as required. Each cable entry port 28 has a large-diameter grommet-type seal 30 to allow sealing around a cable entering via that cable entry port 28. Within the cable tray 12, space is provided for the cables to be laid out and spliced as necessary so that the correct conductors are presented to the correct ports on the front face 18 of the connector unit.

A similar tray can be provided on the opposite side for the connector unit 10, if desired.

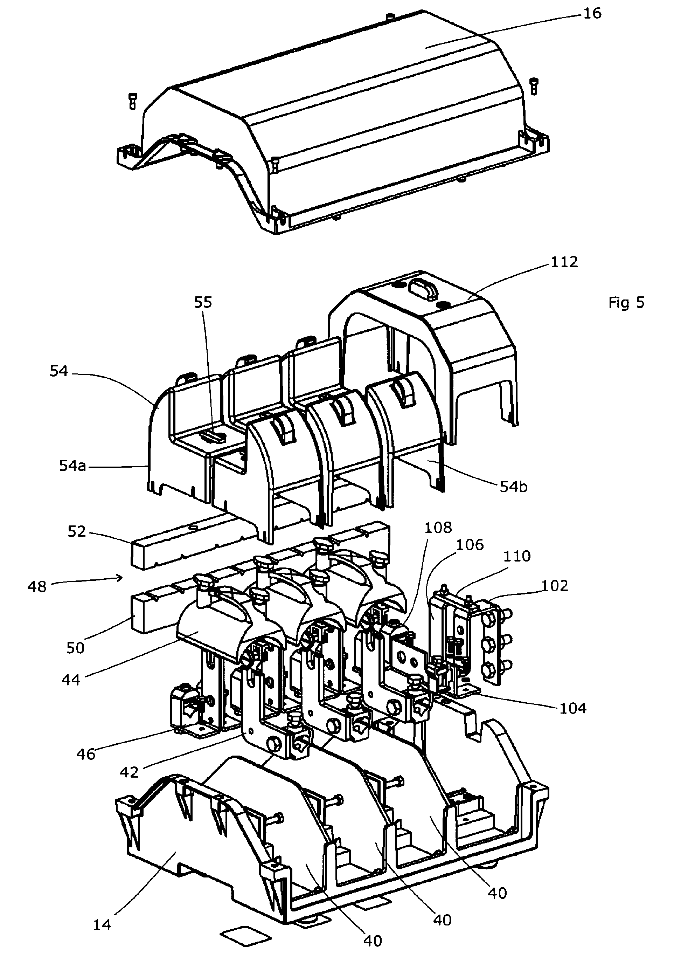

Figure 4 shows the connector unit 10 showing the tray 14, the lid 16 and the front face 18 unobscured by the cable tray 12. Four ports are visible on the front face 18, being three ports 32, 34, 36 for each of the three-phase conductors and a port 38 for the earth conductors. Figure 5 shows the connector unit 10 in an exploded form, showing the internal structure. This includes three upstanding internal walls 40 to divide the internal space into four sections, one for each phase and on for earth, to hinder accidental contact between each. Within each of the sections, there is a contact 42 for an incoming cable, a link unit 44, and a contact 46 for outgoing cables. Fitting the link unit 44 over the incoming contact 42 and the outgoing contact 46 provides an electrical connection between the two contacts via conductors and/or fuses (etc) within the link unit 44. Thus, by opening the connector unit 10 and gaining access to the link units 44, the electrical supply can be established or cut off as desired.

Behind the outgoing electrical contacts there is a cable clamp 48 comprising a lower section 50 and an upper section 52. The upper and lower sections 50, 52 are deformable to conform to the outer profile of the cables within them. No similar clamp is provided for the incoming cables since these are generally sufficiently substantial that their own rigidity is adequate.

Each pair of contacts is provided with an insulating cover 54 to prevent accidental contact with the link units 44 or the contacts 42, 46. This comprises two half-covers 54a, 54b which each cover one of the contacts. Thus, half-cover 54a covers the outgoing contact 46 while half-cover 54b covers the incoming contact 42. Each sits beneath the link unit 44 and has an aperture 55 through which the relevant upstanding contact can extend in order to allow connection to the link unit 44. Thus, in order to remove the relevant half-cover 54a, 54b, the respective link unit 44 must first be removed, thereby providing a degree of protection against accident, at least in relation to work on the outgoing contacts 46.

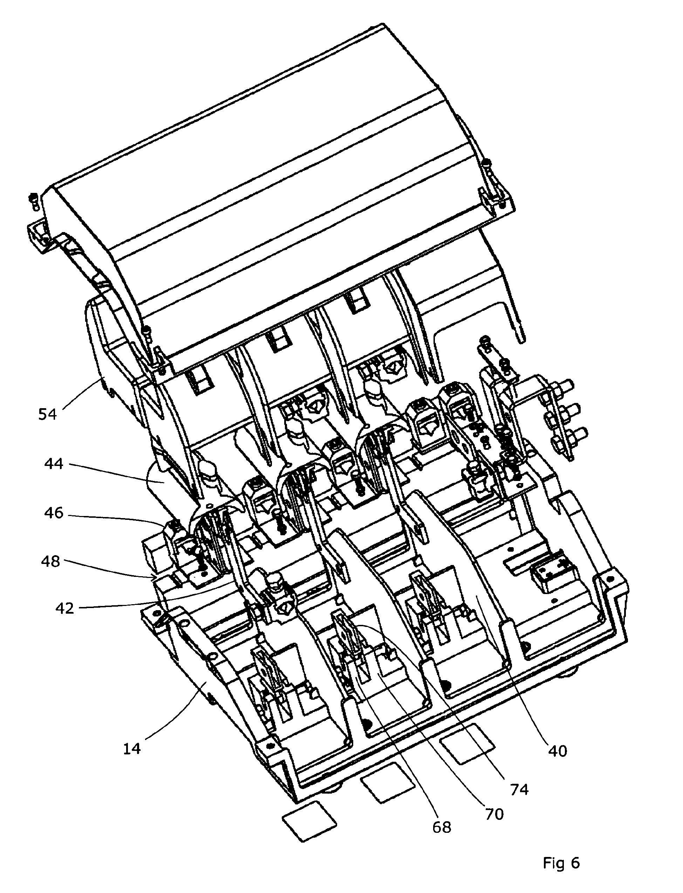

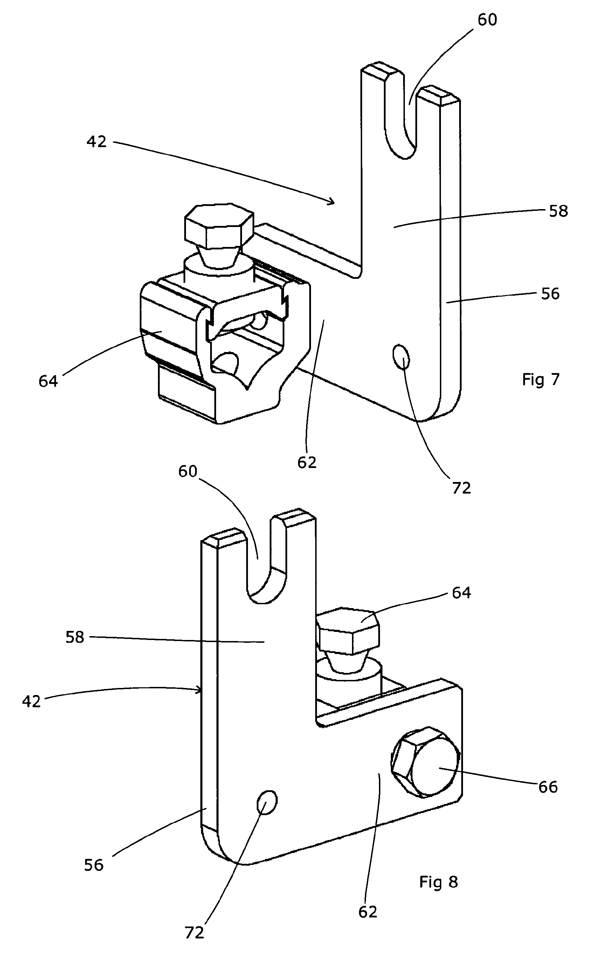

The incoming contacts will now be described with reference to figures 6, 7 and 8. Figure 6 shows the same exploded view as figure 5 but from a higher angle allowing visibility of the internal sections between internal walls 40. Each incoming contact 42 is, as shown in figures 7 and 8, formed as a flat L-shaped section 56 of a suitable conductive material such as plated Copper. The L-shape is arranged so that one limb 58 is upstanding to allow connection with the associated link unit 44; the end of this section has a U-shaped recess 60 to allow interengagement with a suitable clamped conductor as is generally known in the field of power conductors. The remaining limb 62 of the L-shaped section 56 therefore lies generally horizontally, which permits a conventional screw clamp 64 to be attached to one side via a bolt 66.

This contact 42 is held in place on the tray 14 by insertion into a recess that is defined between two side walls 68, 70 provided within the relevant section. These walls 68, 70 are located so that the size of the recess they define corresponds to the dimensions of the contact 42 that is designed to offer the highest electrical rating for which the connector unit will be offered. Thus, that contact will sit neatly between the side walls 68, 70 and will be retained in place via a bolt or other securing means passing through aligned holes in the walls 68, 70 and a hole 72 in the L-shaped section 56.

Figure 6 shows a connector unit intended for a lesser electrical rating. Accordingly, the incoming contacts 42 as somewhat more slender in design in order to reduce the amount of material employed and avoid unnecessary cost. This means that the recess between the side walls 68, 70 is too wide; this is accommodated by placing a sleeve 74 in the recess, in which the L-shaped section 56 fits. The sleeve is also provided with suitable aligned holes to allow the contact to be secured in place in a similar manner. Thus, lower-rated units can use the same mouldings for all polymeric parts, thereby saving the cost of preparing and maintaining additional moulds and the cost of stocking additional parts. The additional material cost of using (arguably) unnecessarily large parts is small in the case of polymeric parts in relation to the above savings. However, for the contacts which require use of a more expensive material, variable size items are catered for.

Figures 5 and 9 to 14 show the outgoing contact 46. Unlike the incoming contact 42, this may have to connect to a plurality of cables leading to different areas of the building being supplied, or to different items of equipment. Thus, a plurality of cable clamps are required, all of which must have a clear line of access from the front of the contact in order to accommodate a relatively rigid conductor. The outgoing contact 46 therefore seeks to provide the cable clamps 76, 78 in a side-by side configuration. It is also desirable to all access to the clamp screw 80 from above, so as to allow them to be tightened easily by an installer.

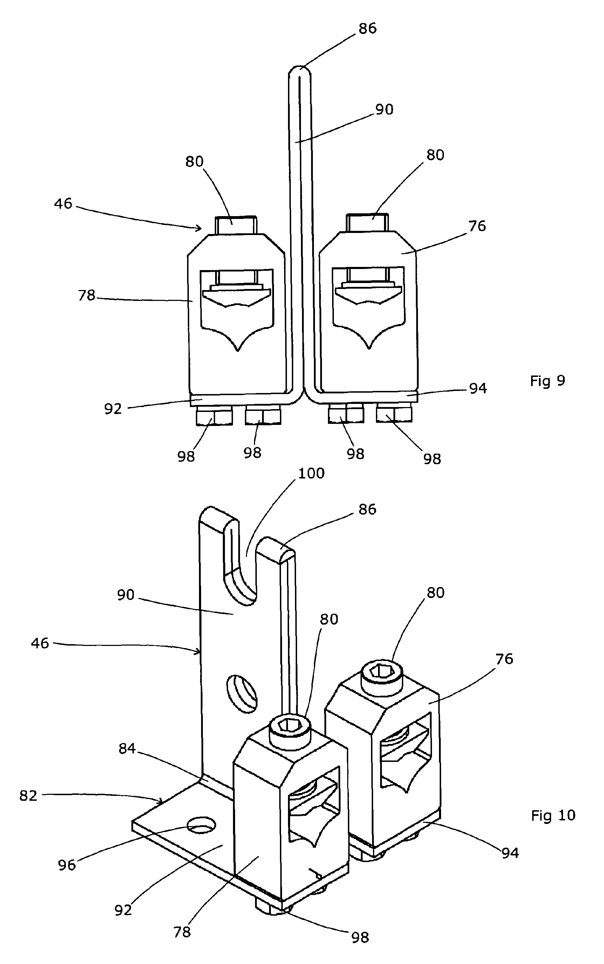

Accordingly, the clamps 76, 78 are placed to one side of the upstanding section of the contact 46. As shown in figures 9 and 10, this therefore comprises a strip 82 of generally flat conductive material such as plated Copper which is subjected to a series of folds. These folds consist of a 90° fold 84 in a first direction, a 180° fold 86 in the opposite direction, and a final 90° fold 88 in the first direction. Each of the fold lines are generally parallel and transverse to a longitudinal extent of the strip 82. The result is a double-thickness upstanding conductor 90 with two single-thickness splayed feet 92, 94 on either side.

Fixing holes 96 can be formed in each of the feet 92, 94 to allow the contact 46 to be mounted on the tray 14 and prevent the 180° bend from opening out. Further fixing holes can be formed in the feet to allow the cable clamps 76, 78 to be attached thereto via bolts 98. As with the incoming contact 42, a U-shaped recess 100 can be cut into the top of the upstanding conductor 90 to accept the link unit 44.

In this example, the distances between the 180° fold 86 and the two 90° folds 84, 88 are identical, with the result that the two feet 92, 94 are level and the contact 46 is able to be fixed to a flat surface. However, by adjusting these distances the feet 92, 94 can be placed at different heights, for example if the contact is to be fixed adjacent a step in the tray 14.

Likewise, the use of two equal 90° bends places the feet 92, 94 transverse to the upstand 90. Adjustment of these angles allows the angle of the upstand 90 to be adjusted, and/or or allows the feet 92, 94 to be attached to a non-level surface.

Thus, the incoming and outgoing power conductors can be accommodated using contacts as described above. It remains only to deal with the earth conductor. The incoming earth conductor arrives via a separate port 38 in the front face of the connector unit 10 and is connected to an incoming earth contact 102 via a suitable cable clamp 104 bolted thereto. This is fixed to the tray 14 and kept separate from the power conductors and contacts 42 via an internal wall 40. A similar arrangement is made for the outgoing earth conductors, via a contact 106 and cable clamp(s) 108. As with the other conductors, a cover 112 is provided.

The two contacts 102, 106 for the incoming and outgoing earth connections are then linked via an earth bar 110. This is a short strip of conductive material that bridges the two contacts 102, 106 and is connected to each via a bolt. This allows the earth bar 110 to be removed if required; as this is less common that isolation of the power conductors it need not be as straightforward. Further, the very different presentation of the earth connections allows for an easy visual discrimination of the earth and power connections, preventing errors.

It will of course be understood that many variations may be made to the above-described embodiment without departing from the scope of the present invention.

## Claims

1. A contact for an item of electrical equipment, comprising a cable connector and an upstanding blade against which a contact is to be made, the blade comprising a strip of metal including a fold line thereby to form a two-layer section.

2. A contact according to claim 1 in which the fold line is at a tip of the upstanding blade.

3. A contact according to claim 1 or claim 2 in which the strip of metal includes a bend at a base of the upstanding blade and the cable connector is connected to the strip of metal at a location therealong such that the bend lies between the upstanding blade and the cable connector.

4. A contact according to claim 3 in which the bend is a right-angle.

5. A contact according to claim 3 or claim 4 in which the strip of metal includes a further bend, one bend being formed in each layer, and the two bends being in opposite directions.

6. A contact according to claim 5 in which the bend and the further bend are adjacent.

7. A contact according to claim 5 or claim 6 in which a further cable connector is attached to the strip of metal at a location therealong such that the further bend lies between the upstanding blade and the cable connector.

8. A contact according to any one of the preceding claims in which the upstanding blade is at least 50 millimetres in length.

9. An electrical distribution box, comprising a tray supporting at least one contact, the contact being in the form of a flat conductor having an angle formed therein and a sleeve around at least the angled part thereof, the tray having a recess in which the sleeve is supported thereby to support the contact.

10. An electrical distribution box according to claim 9 in which the sleeve is non-conductive.

11. An electrical distribution box according to claim 9 in which the sleeve is of a plastics material.

12. An electrical distribution box according to any one of claims 9 to 11 in which a cable connector is attached to the conductor.

13. An electrical distribution box according to any one of claims 9 to 12 in which the conductor is L-shaped.

14. A contact according to any one of the preceding claims, being one of three such contacts in an array for using in conveying a three-phase electrical supply.

15. An electrical distribution box having a first set of contacts according to any one of claims 9 to 13 for connection to an incoming cable from an electrical power source and a second set of contacts according to any one of claims 1 to 8 for connection to one or more outgoing cables to an electrical power consumer, and a set of removable bridges for joining contacts of the first set with corresponding contacts of the second set.

16. An electrical distribution box according to claim 15 in which each set has three contacts.

17. An electrical distribution box according to claim 15 or claim 16 in which the bridges contain a fusible link.

18. A contact for an item of electrical equipment, comprising a plurality of cable connectors and an upstanding blade against which a contact is to be made,
a. the blade comprising a strip of metal including;
i. a fold line, thereby to form a two-layer section,
ii. a first bend in one layer of the two-layer section, located at a base of the upstanding blade, and
iii. a further bend in a second layer of the two-layer section, in a direction opposite to that of the first bend,
b. a first cable connector being connected to the strip of metal at a location therealong such that the first bend lies between the upstanding blade and the cable connector;
c. a further cable connector attached to the strip of metal at a location therealong such that the further bend lies between the upstanding blade and the cable connector.
